(19) Europäisches Patentamt
European Patent Office
Office européen des brevets

(11) EP 4 246 364 A1

(12) EUROPEAN PATENT APPLICATION
published in accordance with Art. 153(4) EPC

(43) Date of publication:
20.09.2023 Bulletin 2023/38

(51) International Patent Classification (IPC):
G06F 30/27 (2020.01)

(21) Application number: 21903181.2

(52) Cooperative Patent Classification (CPC):
G06F 30/10; G06F 30/27; G06Q 10/04

(22) Date of filing: 24.11.2021

(86) International application number:
PCT/JP2021/042994

(87) International publication number:
WO 2022/124077 (16.06.2022 Gazette 2022/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.12.2020 JP 2020205057

(71) Applicant: Resonac Corporation
Tokyo 105-8518 (JP)

(72) Inventor: HANAOKA Kyohei
Tokyo 105-8518 (JP)

(74) Representative: Berggren Oy
P.O. Box 16
Eteläinen Rautatiekatu 10A
00101 Helsinki (FI)

(54) DESIGN ASSISTANCE DEVICE, DESIGN ASSISTANCE METHOD, AND DESIGN ASSISTANCE PROGRAM

(57) A design assistance device according to one embodiment, includes: a data acquisition unit acquiring performance data including a design parameter group and an observation value of a characteristic item; a model construction unit constructing a prediction model for predicting the observation value of the characteristic item as a probability distribution or the like, on the basis of the design parameter group; an acquisition function construction unit constructing a single target-oriented acquisition function having the design parameter group as input and an index value relevant to improvement of characteristics of all of the characteristic items as output, the single target-oriented acquisition function including a target achievement probability term including a total achievement probability calculated on the basis of each of the prediction models by using the design parameter group as a variable, in which target values of all of the characteristic items are achieved; a design parameter group acquisition unit acquiring at least one design parameter group by optimization of the target-oriented acquisition function; and an output unit outputting a design parameter group candidate.

*Fig.2*

## Description

## Technical Field

One aspect of the present disclosure relates to a design assistance device, a design assistance method, and a design assistance program.

## Background Art

Product design using machine learning has been studied. As one field of the product design, for example, in the design of a functional material, for example, a model for estimating the characteristic of a material is constructed by machine learning using learning data including a pair of a compound ratio of a raw material and a characteristic relevant to an experimented or produced material, and the characteristic is predicted for a compound ratio of an unexperimented raw material. By making an experiment plan with such a prediction of the characteristic, parameters such as the characteristic of the material and the compound ratio of the raw material can be efficiently optimized, and a development efficiency is improved. In addition, as such an optimization method, it is known that Bayesian optimization is effective, and a design device outputting a design value by using the Bayesian optimization is known.

## Citation List

## Patent Literature

Patent Literature 1: Japanese Unexamined Patent Publication No. 2020-52737

## Summary of Invention

## Technical Problem

On the other hand, in the product development of the material or the like, in order to improve a plurality of characteristics changed in accordance with a design variable in a state where a plurality of object variables (characteristics) are given, the plurality of object variables are optimized. This is referred to as multi-objective optimization. In a case where there is a trade-off between the object variables, there are a plurality of optimal solutions (pareto solutions), which are not set to one solution. For example, in a case where a target value is set for each of the object variables, in order to obtain the optimal pareto solution, it is considered to follow an approach of obtaining a number of pareto solutions and selecting a pareto solution close to a design target. However, in such an approach, it is necessary to evaluate a number of objective functions, and a processing load thereof becomes enormous, which is not realistic. Such problems are not limited to material design, but are common in general product design.

Therefore, the present invention has been made in consideration of the problems described above, and an object thereof is to make the optimization of the characteristic of a product configuring an object variable and a design variable in a production process of a product, an in-process product, a half-finished product, a component, or a trial product available with a low load by fewer experiments.

## Solution to Problem

A design assistance device according to one aspect of the present disclosure is a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the device including: a data acquisition unit acquiring a plurality of performance data pieces including the design parameter group and an observation value of each of the plurality of characteristic items, for the produced product, in-process product, half-finished product, component, or trial product; a model construction unit constructing a prediction model for predicting the observation value of the characteristic item as a probability distribution or an approximate or alternative index thereof on the basis of the design parameter group, on the basis of the performance data; an acquisition function construction unit constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable; a design parameter group acquisition unit acquiring at least one design parameter group by optimization of the target-oriented acquisition function; and an output unit outputting the design parameter group acquired by the design parameter group acquisition unit.

A design assistance method according to one aspect of the present disclosure is a design assistance method in a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the method including: a data acquisition step of acquiring a plurality of performance data pieces including the design parameter group and an observation value of each of the plurality of characteristic items, for the produced product, in-process product, half-finished product, component, or trial product; a model construction step of constructing a prediction model for predicting the observation value of the characteristic item as a probability distribution or an approximate or alternative index thereof on the basis of the design parameter group, on the basis of the performance data; an acquisition function construction step of constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable; a design parameter group acquisition step of acquiring at least one design parameter group by optimization of the target-oriented acquisition function; and an output step of outputting the design parameter group acquired in the design parameter group acquisition step.

A design assistance program according to one aspect of the present disclosure is a design assistance program for causing a computer to function as a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the program for allowing the computer to attain: a data acquisition function of acquiring a plurality of performance data pieces including the design parameter group and an observation value of each of the plurality of characteristic items, for the produced product, in-process product, half-finished product, component, or trial product; a model construction function of constructing a prediction model for predicting the observation value of the characteristic item as a probability distribution or an approximate or alternative index thereof on the basis of the design parameter group, on the basis of the performance data; an acquisition function construction function of constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable; a design parameter group acquisition function of acquiring at least one design parameter group by optimization of the target-oriented acquisition function; and an output function of outputting the design parameter group acquired by the design parameter group acquisition function.

According to such an aspect, the prediction model for predicting the observation value of the characteristic item is constructed on the basis of the performance data. Since such a prediction model predicts the observation value as the probability distribution or the approximate or alternative index thereof, the achievement probability with respect to the target value of the characteristic item can be calculated in accordance with the given design parameter group. In addition, the target-oriented acquisition function having the design parameter group as input and the index value relevant to satisfying the target values of all of the characteristic items as output is constructed. Since the target-oriented acquisition function includes the target achievement probability term including the total achievement probability relevant to the achievement of the target values of all of the characteristic items, the total achievement probability is reflected in the index value output from the target-oriented acquisition function. Accordingly, by the optimization using the index value output from the target-oriented acquisition function as an object variable, it is possible to obtain the design parameter group capable of achieving a target relevant to the characteristic item.

In the design assistance device according to another aspect, the design parameter group acquisition unit may acquire at least one design parameter group for optimizing the output of the target-oriented acquisition function.

According to such an aspect, it is possible to obtain the design parameter group that can be close to the achievement of the target relevant to the characteristic item.

In the design assistance device according to another aspect, the design parameter group acquisition unit may acquire a plurality of design parameter groups by a predetermined algorithm.

According to such an aspect, it is possible to easily obtain the plurality of design parameter groups available to the next experiment.

In the design assistance device according to another aspect, the total achievement probability may be an infinite product of an achievement probability with respect to the target value of each of the characteristic items, and the achievement probability with respect to the target value of each of the characteristic items may be based on the probability distribution of the observation value obtained by inputting the design parameter group to the prediction model of each of the characteristic items.

According to such an aspect, since the prediction model is configured to output the probability distribution of the observation value, it is possible to obtain the achievement probability of the target value of each of the characteristic items according to the design parameter group. Then, since the total achievement probability calculated by the infinite product of the achievement probability of the target value of each of the characteristic items is included in the target achievement probability term of the target-oriented acquisition function, the total achievement probability is suitably reflected in the index value from the target-oriented acquisition function.

In the design assistance device according to another aspect, the target achievement probability term may include the total achievement probability or a logarithm of the total achievement probability.

According to such an aspect, since the target achievement probability term includes the total achievement probability or the logarithm of the total achievement probability, the total achievement probability is suitably reflected in the index value from the target-oriented acquisition function.

In the design assistance device according to another aspect, the acquisition function construction unit may construct an acquisition function having the design parameter group as input and the index value of the design parameter group relevant to the improvement of the characteristic indicated in the characteristic item as output, for each of the characteristic items, and the target-oriented acquisition function may further include a term of a weighted sum of the acquisition function of each of the characteristic items.

According to such an aspect, since the term of the weighted sum of the acquisition function of each of the characteristic items is included in the target-oriented acquisition function, the improvement of the characteristic for each of the characteristic items according to the design parameter group is suitably reflected in the index value from the target-oriented acquisition function.

In the design assistance device according to another aspect, the target-oriented acquisition function may include a sum of the term of the weighted sum of the acquisition function of each of the characteristic items and the target achievement probability term.

According to such an aspect, the degree of improvement of the characteristic for each of the characteristic items and the magnitude of the total achievement probability relevant to the achievement of the target values of all of the characteristic items, according to the design parameter group, are suitably reflected in the index value from the target-oriented acquisition function.

In the design assistance device according to another aspect, the target-oriented acquisition function may include a product of the term of the weighted sum of the acquisition function of each of the characteristic items and the target achievement probability term.

According to such an aspect, the degree of improvement of the characteristic for each of the characteristic items and the magnitude of the total achievement probability relevant to the achievement of the target values of all of the characteristic items, according to the design parameter group, are suitably reflected in the index value from the target-oriented acquisition function.

In the design assistance device according to another aspect, the acquisition function construction unit may construct the acquisition function of each of the characteristic items by any one of lower confidence bound (LCB), expected improvement (EI), and probability of improvement (PI).

According to such an aspect, the acquisition function suitable for the evaluation of the improvement of the characteristic indicated in each of the characteristic items is constructed.

In the design assistance device according to another aspect, the acquisition function construction unit may construct the acquisition function including a cost value relevant to a cost including at least any one of time and a cost according to the production of the product, the in-process product, the half-finished product, the component, or the trial product, generated in accordance with the design parameter group, the acquisition function for outputting the index value indicating that a degree of suitability of the design parameter group decreases as the cost value increases.

According to such an aspect, when acquiring the design parameter group, the cost according to the production of the product is considered. Accordingly, it is possible to reduce the cost relevant to the production of the product, an experiment, and the like.

In the design assistance device according to another aspect, the prediction model may be a regression model or a classification model having the design parameter group as input and the probability distribution of the observation value as output, and the model construction unit may construct the prediction model by machine learning using the performance data.

According to such an aspect, since the prediction model is constructed as a predetermined regression model or classification model, the prediction model capable of acquiring the probability distribution or the approximate or alternative index thereof of the observation value of the characteristic item is obtained.

In the design assistance device according to another aspect, the prediction model may be a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of a prediction of a plurality of predictors constructed in different conditions.

According to such an aspect, the prediction model capable of predicting the observation value of the characteristic item based on the design parameter group as the probability distribution or the approximate or alternative index thereof is constructed.

**Advantageous Effects of Invention**

According to one aspect of the present disclosure, the optimization of the characteristic of the product or the like configuring the object variable and the design variable in the production process of the product, the in-process product, the half-finished product, the component, or the trial product is available with a low load by fewer experiments.

**Brief Description of Drawings**

FIG. 1 is a diagram illustrating an outline of a material design process to which a design assistance device according to an embodiment is applied.

FIG. 2 is a block diagram illustrating an example of a functional configuration of the design assistance device according to the embodiment.

FIG. 3 is a hard block diagram of the design assistance device according to the embodiment.

FIG. 4 is a diagram illustrating an example of a design parameter group relevant to a produced material.

FIG. 5 is a diagram illustrating an example of an observation value relevant to the produced material.

FIG. 6 is a flowchart illustrating an optimization process of a characteristic item and a design parameter in material design.

FIG. 7 is a flowchart illustrating an example of contents of a design assistance method in the design assistance device according to the embodiment.

FIG. 8 is a diagram illustrating a configuration of a design assistance program.

**Description of Embodiments**

Hereinafter, an embodiment of the present invention will be described in detail with reference to the attached drawings. Note that, in the description of the drawings, the same reference numerals will be applied to the same or equivalent elements, and the repeated description will be omitted.

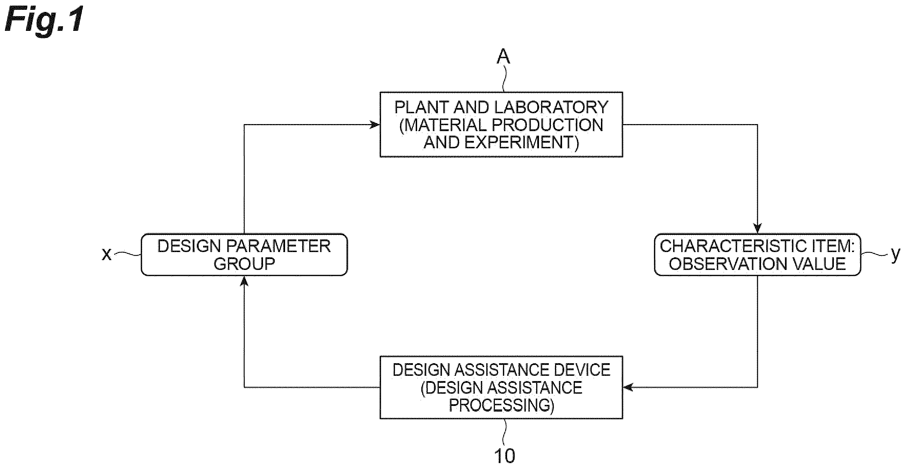

FIG. 1 is a diagram illustrating the outline of a material design process, which is an example of a design process of a product, an in-process product, a half-finished product, a component, or a trial product to which a design assistance device according to an embodiment is applied. Note that, hereinafter, the "product, the in-process product, the half-finished product, the component, or the trial product" will be described as the "product or the like". A design assistance device 10 according to this embodiment can be applied to a design process of any product or the like including a plurality of characteristic items indicating the characteristic of the product or the like and a target value of each of the characteristic items. The design assistance device 10 can be applied to a method for optimizing a design parameter and an object variable of the product or the like by repeating the determination of the design parameter and the production of the product, the in-process product, the half-finished product, the component, or the trial product based on the determined design parameter. Specifically, the design assistance device 10, for example, can be applied to the design of a product such as a vehicle and a chemical, the optimization of a molecular structure of the chemical, and the like, in addition to the development and the design of the material. In this embodiment, as described above, design assistance processing of the design assistance device 10 will be described with an example of the material design as an example of the design of the product or the like.

As illustrated in FIG. 1, the design assistance processing of the design assistance device 10 is applied to material production and an experiment in a plant, a laboratory A, and the like. That is, the material is produced in accordance with a set design parameter group x, in the plant, the laboratory A, and the like, and an observation value y of a plurality of characteristic items indicating the characteristic of the material is acquired on the basis of the produced material. Note that, the material production and the experiment in the plant and the laboratory A may be a simulation. In this case, the design assistance device 10 provides the design parameter group x for executing the next simulation.

The design assistance device 10 optimizes the plurality of characteristic items and the design parameter, on the basis of performance data including the design parameter group x and the observation value y of the plurality of characteristic items of the material produced on the basis of the design parameter group x. Specifically, the design assistance device 10 outputs the design parameter group x for the next production and experiment, with a possibility that a more suitable characteristic is obtained, on the basis of the design parameter group x and the observation value y relevant to the produced material.

For example, the design assistance device 10 of this embodiment is applied to achieve a plurality of target characteristics by tuning a plurality of design variables, in the design of a material product. As an example of the design of the material product, in a case where a certain material is produced by mixing a plurality of polymers and additives, the design assistance device 10 sets the design parameter group such as a compound amount of each of the polymers and additives to the design variable, sets the observation value such as an elastic modulus and a coefficient of thermal expansion, which are the characteristic item, to the object variable, to be used for the tuning of the design parameter group for achieving the target value of the plurality of characteristic items.

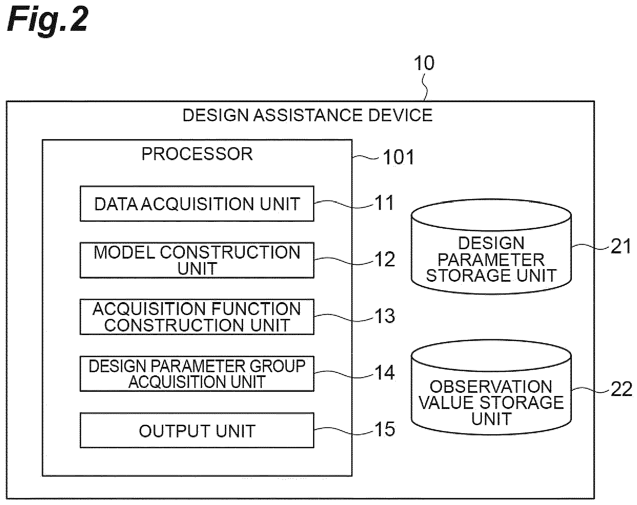

FIG. 2 is a block diagram illustrating an example of a functional configuration of the design assistance device according to embodiment. The design assistance device 10 is a device obtaining a plurality of design parameters satisfying the target value set for each of the plurality of characteristic items indicating the characteristic of the material, in the design of the material produced on the basis of the design parameter group including the plurality of design parameters. As illustrated in FIG. 2, the design assistance device 10 may include function units configured in a processor 101, a design parameter storage unit 21, and an observation value storage unit 22. Each of the function units will be described below.

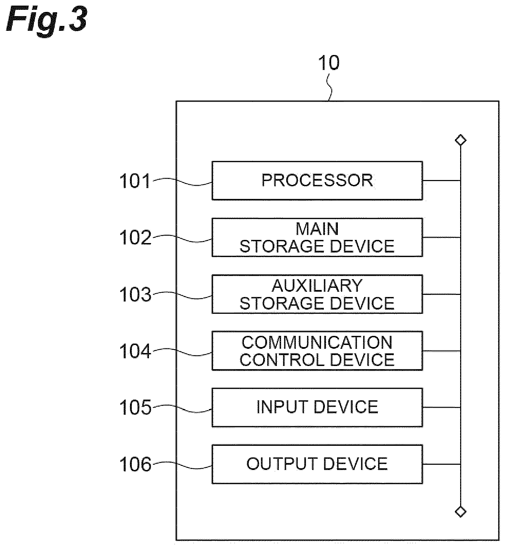

FIG. 3 is a diagram illustrating an example of a hardware configuration of a computer 100 configuring the design assistance device 10 according to the embodiment. Note that, the computer 100 may configure the design assistance device 10.

As an example, the computer 100 includes the processor 101, a main storage device 102, an auxiliary storage device 103, and a communication control device 104, as a hardware constituent. The computer 100 configuring the design assistance device 10 may further include an input device 105 such as a keyboard, a touch panel, or a mouse, which is an input device, and an output device 106 such as a display.

The processor 101 is an arithmetic device executing an operating system and an application program. Examples of the processor include a central processing unit (CPU) and a graphics processing unit (GPU), and the type of processor 101 is not limited thereto. For example, the processor 101 may be a combination of a sensor and a dedicated circuit. The dedicated circuit may be a programmable circuit such as a field-programmable gate array (FPGA), or may be other types of circuits.

The main storage device 102 is a device storing a program for attaining the design assistance device 10 or the like, an arithmetic result output from the processor 101, and the like. The main storage device 102, for example, includes at least one of a read only memory (ROM) and a random access memory (RAM).

In general, the auxiliary storage device 103 is a device capable of storing more massive amount of data than the main storage device 102. The auxiliary storage device 103, for example, includes a non-volatile storage medium such as a hard disk and a flash memory. The auxiliary storage device 103 stores a design assistance program P1 for allowing the computer 100 to function as the design assistance device 10 or the like, and various data pieces.

The communication control device 104 is a device executing data communication with respect to other computers via a communication network. The communication control device 104, for example, includes a network card or a wireless communication module.

Each functional element of the design assistance device 10 is attained by reading the corresponding program P1 on the processor 101 or the main storage device 102 to allow the processor 101 to execute the program. The program P1 includes a code for attaining each functional element of the corresponding server. The processor 101 operates the communication control device 104, in accordance with the program P1, to execute data read and write in the main storage device 102 or the auxiliary storage device 103. According to such processing, each functional element of the corresponding server is attained.

The program P1 may be provided after being fixedly recorded in a tangible recording medium such as a CD-ROM, a DVD-ROM, and a semiconductor memory. Alternatively, at least one of such programs may be provided as a data signal superimposed on a carrier wave via a communication network.

Referring to FIG. 2 again, the design assistance device 10 includes a data acquisition unit 11, a model construction unit 12, an acquisition function construction unit 13, a design parameter group acquisition unit 14, and an output unit 15. As illustrated in FIG. 2, the design parameter storage unit 21 and the observation value storage unit 22 may be configured in the design assistance device 10, or may be configured as other devices accessible from the design assistance device 10.

The data acquisition unit 11 acquires a plurality of performance data pieces relevant to the produced material. The performance data includes a pair of the design parameter group and the observation value of each of the plurality of characteristic items. The design parameter storage unit 21 is a storage means storing the design parameter group in the performance data, and for example, may be configured in the main storage device 102, the auxiliary storage device 103, and the like. The observation value storage unit 22 is a storage means storing the observation value in the performance data.

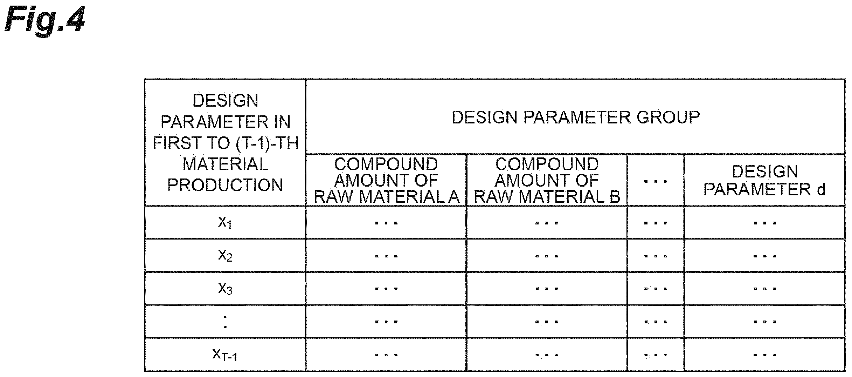

FIG. 4 is a diagram illustrating an example of the design parameter group stored in the design parameter storage unit 21. As illustrated in FIG. 4, the design parameter storage unit 21 stores a design parameter group xt in the first (t = 1) to (T-1)-th (t = T-1) material production. As an example, the design parameter group x may include a compound amount of a raw material A, a compound amount of a raw material B, and a design parameter d, or may configure vector data with a dimension number according to the number of design parameters. In addition to those exemplified, for example, the design parameter may be non-vector data such as a molecular structure and an image, and the like. In addition, in the case of addressing the problem of selecting the optimal molecules from a plurality of types of molecules, the design parameter may be data indicating options of the plurality of molecules.

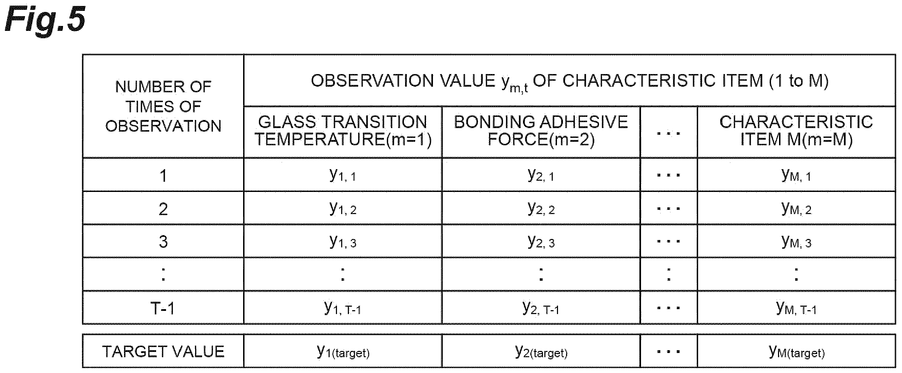

FIG. 5 is a diagram illustrating an example of the observation value y stored in the observation value storage unit 22. As illustrated in FIG. 5, the observation value storage unit 22 stores an observation value $y_{m,t}$ of a plurality of characteristic items (m = 1 to M) indicating the characteristic of the material produced in the first (t = 1) to (T-1)-th (t = T-1) material production. As an example, the characteristic item m may include a glass transition temperature, a bonding adhesive force, and a characteristic item M. In addition, in each of the characteristic items, a target value $y_{m(target)}$ is set. A pair of the design parameter group xt and the observation value $y_{m,t}$ configure the performance data.

The design assistance device 10 obtains a design parameter group $x_T$ for the T-th material production, on the basis of the performance data in the first (t = 1) to (T-1)-th (t = T-1) material production. The design parameter group $x_T$ is a parameter group in which the observation value of each of the characteristic items satisfies each of the target values $y_{m(target)}$, or a parameter group in which the observation value of each of the characteristic items is closer to each of the target values $y_{m(target)}$.

The model construction unit 12 constructs a prediction model, on the basis of the performance data. The prediction model is a model for predicting the observation value $y_m$ of the characteristic item m as a probability distribution or an approximate or alternative index thereof, on the basis of the design parameter group x. A model configuring the prediction model may be a model capable of predicting the observation value $y_m$ as the probability distribution or the approximate or alternative index thereof, but the type thereof is not limited. The prediction model for predicting the observation value $y_m$ as the alternative index of the probability distribution, for example, predicts the probability distribution of the observation value by using a distribution of a prediction value of a predictor configuring an ensemble (a random forest), a distribution obtained by a Monte Carlo dropout (a neural network), a distribution of the prediction of a plurality of predictors constructed in different conditions (any machine learning method), and the like as the alternative index.

For example, the prediction model may be a regression model having the design parameter x as input and the probability distribution of the observation value $y_m$ as output. In a case where the prediction model is the regression model, the prediction model, for example, may include any one of a Gaussian process regression, a random forest, and a neural network. The model construction unit 12 may construct the prediction model by a known machine learning method using the performance data. The model construction unit 12 may construct the prediction model by a machine learning method for updating the parameter of the prediction model by applying the performance data to the prediction model.

In addition, the prediction model may be a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of the prediction of a plurality of predictors constructed in different conditions. The prediction of the probability distribution of the observation value, or alternative index thereof can be obtained by a model-specific method. The probability distribution or the approximate or alternative index thereof of the observation value can be obtained on the basis of the posterior distribution of the prediction value in the case of a Gaussian process regression and a Bayesian neural network, can be obtained on the basis of the distribution of the prediction of the predictor configuring the ensemble in the case of a random forest, can be obtained on the basis of the prediction interval and the confidence interval in the case of a linear regression, and can be obtained on the basis of the Monte Carlo dropout in the case of a neural network. Here, a calculation method of the distribution of the observation value with respect to each of the machine learning models, or the alternative index thereof is not limited to the method described above.

In addition, any model may be expanded to the model capable of predicting the probability distribution of the observation value, or the alternative index thereof. Examples of the model include a model using the distribution of the prediction value of each model, which is obtained by constructing a plurality of data sets by a bootstrap method or the like and constructing the prediction model with respect to each of the plurality of data sets, as the alternative index of the probability distribution of the observation value. Here, a method for expanding the machine learning model to the model capable of predicting the probability distribution of the observation value, or the alternative index thereof is not limited to the method described above.

In addition, the prediction model may be constructed by bagging ensemble learning such as a linear regression, a PLS regression, a Gaussian process regression, and a random forest, boosting ensemble learning such as gradient boosting, a support-vector machine, a neural network, and the like.

In the prediction model constructed as the Gaussian process regression, the probability distribution of the observation value is predicted by inputting the design parameter group x in the performance data configuring an explanatory variable of training data, the observation value y configuring the object variable, and the design parameter x to be predicted to the model.

In addition, the model construction unit 12 may tune the hyperparameter of the prediction model by a known hyperparameter tuning method. That is, the model construction unit 12 may update the hyperparameter of the prediction model constructed by the Gaussian process regression with maximum likelihood estimation using a vector representing the design parameter group x, which is the explanatory variable in the performance data, and the observation value y, which is the object variable.

In addition, the prediction model may be constructed by a classification model. In a case where the prediction model is the classification model, the model construction unit 12 is capable of constructing the prediction model by a known machine learning method in which the evaluation of the probability distribution using the performance data can be performed.

As described above, since the model construction unit 12 constructs the prediction model with a predetermined regression model or classification model, it is possible to acquire the probability distribution of the observation value of the characteristic item, on the basis of any design parameter group x.

In addition, the prediction model may be a single task model for predicting the observation value of one characteristic item as the probability distribution or the approximate or alternative index thereof, or a multitask model for predicting the observation value of the plurality of characteristic items as the probability distribution or the approximate or alternative index thereof. As described above, since the prediction model is constructed by the multitask model or the single task model suitably configured in accordance with the properties of the characteristic item, it is possible to improve a prediction accuracy of the observation value by the prediction model.

The acquisition function construction unit 13 constructs a target-oriented acquisition function, which is a single acquisition function having the design parameter group as input and an index value of the design parameter group relevant to the improvement of the characteristics indicated in all of the characteristic items as output. The target-oriented acquisition function includes at least a target achievement probability term. The target achievement probability term includes the total achievement probability, which is a probability calculated on the basis of the prediction model by using the design parameter group as a variable. The total achievement probability is a probability that the target values of all of the characteristic items are achieved.

Specifically, the acquisition function construction unit 13 constructs a target-oriented acquisition function A'(x) as represented in Formula (1) described below.

$$A'(x) = g(P(x)) \dots(1)$$

In Formula (1), g(P(x)) is the target achievement probability term. That is, the target-oriented acquisition function A'(x) includes at least the target achievement probability term g(P(x)).

The target achievement probability term includes a total achievement probability P(x). For example, in a case where target achievement events of each of the characteristic items are independent from each other, the total achievement probability P(x) may be defined as with Formula (2) described below.

$$P(x) = \Pi_{1<=m<=M}Pm(x) \dots(2)$$

That is, the total achievement probability P(x) is the infinite product of an achievement probability Pm(x) of each of the characteristic items m (m = 1 to M). Since the prediction model is capable of predicting the probability distribution of the observation value of the characteristic item, on the basis of the design parameter group x, the achievement probability Pm(x) of each of the characteristic items can be expressed as a function including the design parameter group x using the prediction model of each of the characteristic items as an input variable. In addition, the total achievement probability P(x) may be expressed as a function including the design parameter group x based on the prediction models of all of the characteristic items as the input variable, without calculating the achievement probability of each of the characteristic items.

The target achievement probability term g(P(x)) includes the total achievement probability P(x). For example, the target achievement probability term g(P(x)) may include the total achievement probability P(x) as represented in Formula (3), or may include the logarithm of the total achievement probability P(x) as represented in Formula (4).

$$g(P(x)) = P(x) \dots(3)$$

$$g(P(x)) = \log(P(x)) \dots(4)$$

In addition, the target achievement probability term may be a term in which the total achievement probability P(x) or the logarithm of the total achievement probability P(x) is further multiplied by a coefficient, or may include a term to which another element is further added.

As described above, in an example of this embodiment, since the prediction model is configured to output the probability distribution of the observation value, it is possible to obtain the achievement probability Pm(x) of the target value of each of the characteristic items m according to the design parameter group. Then, since the total achievement probability calculated by the infinite product of the achievement probability Pm(x) of the target value of each of the characteristic items m is included in the target achievement probability term of the target-oriented acquisition function, the total achievement probability is suitably reflected in the index value from the target-oriented acquisition function.

The acquisition function construction unit 13 may construct the target-oriented acquisition function including a term of the weighted sum of the acquisition function Am(x) of each of the characteristic items m, in addition to the target achievement probability term. The term of the weighted sum of the acquisition function Am(x), for example, is represented by Formula (5) described below.

$$\sum w_m Am(x) \dots (5)$$

In Formula (5), $w_m$ is a weight with respect to each of the characteristic items m, and may be arbitrarily set in advance. In addition, in a case where Am(x) and P(x) include two types of functions of a function for which maximization is suitable and a function for which minimization is suitable, one of two types of functions may be multiplied by -1 to unify Am(x) and P(x) to the function for which the maximization is suitable or the function for which the minimization is suitable.

As with Formula (6), the acquisition function construction unit 13 may construct the target-oriented acquisition function A'(x) including the sum of the term of the weighted sum of the acquisition function of each of the characteristic items and the target achievement probability term.

$$A'(x) = \sum w_m Am(x) + g(P(x)) \dots (6)$$

In addition, as with Formula (6), the acquisition function construction unit 13 may construct the target-oriented acquisition function A'(x) including the product of the term of the weighted sum of the acquisition function of each of the characteristic items and the target achievement probability term.

$$A'(x) = \sum w_m Am(x) \times g(P(x)) \dots (7)$$

In order to construct the target-oriented acquisition function A'(x) as exemplified in Formula (6) and Formula (7), the acquisition function construction unit 13 may construct the acquisition function including the design parameter group as the input variable and the index value of the design parameter group relevant to the improvement of the characteristic indicated in the characteristic item as output, for each of the characteristic items m. Specifically, the acquisition function construction unit 13 constructs the acquisition function Am(x) for each of the characteristic items m, on the basis of the prediction model. The acquisition function Am(x) is a function including the design parameter group x as the input variable and the index value of the design parameter group relevant to the improvement of the characteristic indicated in each of the characteristic items m as output. The acquisition function is a function for outputting the index value indicating the degree of suitability as a solution of the design parameter group as the explanatory variable (including being close to the optimal solution or being suitable for searching for the optimal solution), in order to improve the observation value of the characteristic item predicted by the prediction model.

The acquisition function construction unit 13, for example, may construct the acquisition function by a known function such as lower confidence bound (LCB).

LCB is used in the case of minimizing the output of the function, and a suitable design parameter is obtained by minimizing the value of LCB. In the case of constructing the acquisition function by LCB, the acquisition function construction unit 13 defines and constructs the acquisition function Am(x) as with Formula (9) described below.

$$Am(x) = m(x) - a\sigma(x) \dots (9)$$

The formula of the acquisition function described above is a formula representing the lower limit of the confidence interval in the case of assuming that the observation value predicted by the prediction model follows a normal distribution, m(x) in the formula described above is the average of the predictions, $\sigma(x)$ is the variance of the predictions, and a is any parameter.

In a case where the prediction model is constructed as the Gaussian regression process, m(x) and $\sigma(x)$ are obtained by inputting the design parameter group x in the performance data configuring the explanatory variable of the training data, the observation value y configuring the object variable, and the design parameter group x to be predicted to a theoretical formula of a posterior distribution of the model of the Gaussian process regression.

In addition, the acquisition function construction unit 13 may configure the acquisition function Am(x) by a known function such as expected improvement (EI) and probability of improvement (PI).

Note that, the acquisition function construction unit 13 may construct the acquisition function including a cost function cost(x) in which a cost (time, a cost, and the like) required for the material production and the experiment based on the design parameter group x is defined, for each of the characteristic items. The acquisition function construction unit 13 constructs the acquisition function for outputting the index value indicating that the degree of suitability of the design parameter group x decreases as a cost value calculated by the cost function increases.

Specifically, in the case of constructing a suitable acquisition function by maximizing the output, the acquisition function construction unit 13 constructs the acquisition function for outputting a smaller index value as the cost value calculated by the cost function increases. The acquisition function construction unit 13 may construct an acquisition function Am(x)' as with Formula (10) described below.

$$Am(x)' = Am(x) - cost(x) \ldots (10)$$

In addition, in the case of constructing a suitable acquisition function by minimizing the output, the acquisition function construction unit 13 constructs the acquisition function for outputting a larger index value as the cost value calculated by the cost function increases. The acquisition function construction unit 13 may construct the acquisition function Am(x)' as with Formula (11) described below.

$$Am(x)' = Am(x) + cost(x) \ldots (11)$$

Note that, the acquisition function including the cost function is not limited to the example described above, and may include a term for multiplying the index value by the cost function or the cost value, or dividing the index value by the cost function or the cost value.

As described above, since the cost according to the material production is considered in the material production and the experiment by optimizing the target-oriented acquisition function including acquisition function in which the cost is considered, it is possible to reduce the cost relevant to the material production, the experiment, and the like.

The design parameter group acquisition unit 14 acquires at least one design parameter group by the optimization of the target-oriented acquisition function. Specifically, as an example, the design parameter group acquisition unit 14 may acquire at least one design parameter group for optimizing the output of the target-oriented acquisition function. Specifically, the design parameter group acquisition unit 14 implements optimization including the index value output from the target-oriented acquisition function A'(x) constructed by the acquisition function construction unit 13 as the object variable to acquire the design parameter group x as the optimal solution.

In addition, as an example, the design parameter group acquisition unit 14 may acquire a plurality of design parameter groups by a predetermined algorithm. Specifically, the design parameter group acquisition unit 14 may acquire the plurality of design parameter groups by applying a batch Bayesian optimization method to the target-oriented acquisition function. The batch Bayesian optimization method, for example, may be a method such as local penalization, but the method is not limited.

The output unit 15 outputs the design parameter group acquired by the design parameter group acquisition unit 14. That is, the output unit 15 outputs the design parameter group obtained on the basis of the performance data in the first (t = 1) to (T-1)-th (t = T-1) material production, as the design parameter group $x_T$ for the T-th material production.

In addition, in a case where the plurality of design parameter groups are acquired by the design parameter group acquisition unit 14, the output unit 15 outputs the acquired design parameter group as the design parameter group for the material production for N times subsequent to the (T-1)-th material production. The design parameter group for the material production for a plurality of times may be available to simultaneous experiment and material production.

An output mode is not limited, and the output unit 15, for example, outputs the design parameter group candidate by displaying the design parameter group candidate on a predetermined display device or by storing the design parameter group candidate in a predetermined storage means.

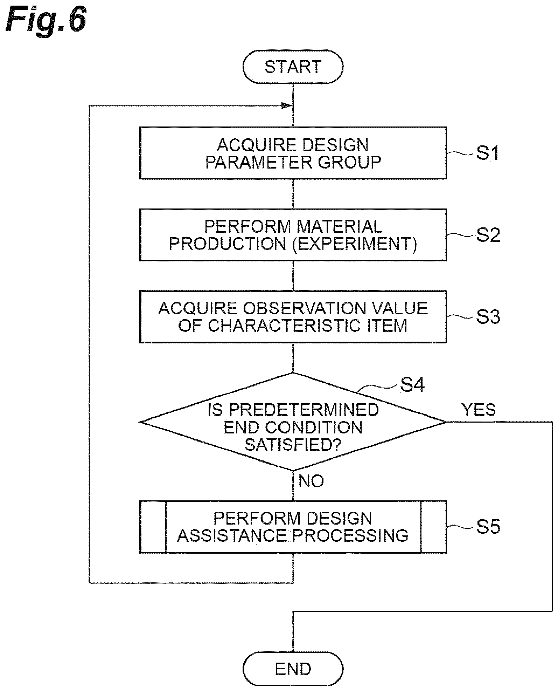

FIG. 6 is a flowchart illustrating an optimization process of the characteristic item and the design parameter group in the material design.

In step S1, the design parameter group is acquired. Here, the design parameter group to be acquired may be for the initial material production (experiment), may be a design parameter group set arbitrarily, or may be a design parameter group set on the basis of the already performed experiment or the like.

In step S2, the material production is performed. In step S3, the observation value of the characteristic item of the produced material is acquired. The pair of the design parameter group as a production condition in step S2 and the observation value of each of the characteristic items acquired in step S3 configure the performance data.

In step S4, whether a predetermined end condition is satisfied is determined. The predetermined end condition may be a condition for optimizing the design parameter group and the observation value of the characteristic item, and may be arbitrarily set. The end condition for optimization, for example, may be reaching a predetermined number of times of the production (the experiment) and the acquisition of the observation value, reaching the target value of the observation value, the convergence of the optimization, and the like. In a case where it is determined that the predetermined end condition is satisfied, the optimization process is ended. In a case where it is not determined that the predetermined end condition is satisfied, the process proceeds to step S5.

In step S5, the design assistance processing of the design assistance device 10 is performed. The design assistance processing is processing of outputting the design parameter group for the next material production. Then, the process returns to step S1 again.

Note that, in the first cycle of a processing cycle including steps S1 to S5, in a case where a plurality of pairs of the design parameter groups and the observation values of the characteristic items are obtained as the initial data, the processing of steps S1 to S4 is omitted. In a case where the initial data is not obtained, in step S1, for example, the design parameter group obtained by any method such as design of experiments and random search is acquired. After the second cycle of the processing cycle, in step S1, the design parameter group output in step S5 is acquired.

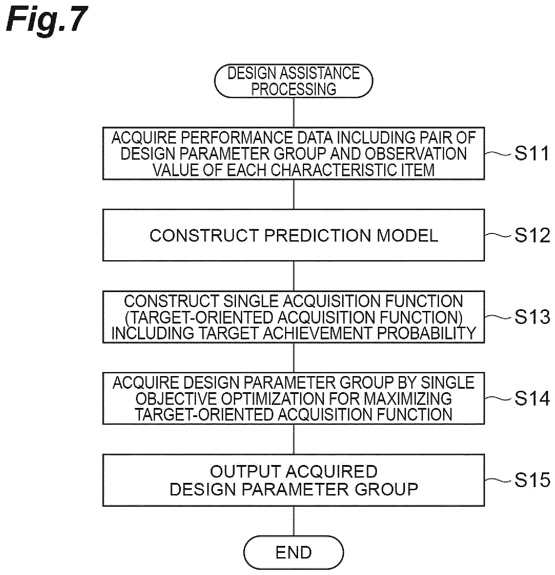

FIG. 7 is a flowchart illustrating an example of the contents of a design assistance method in the design assistance device 10 according to the embodiment, and illustrates the processing of step S5 in FIG. 6. The design assistance method is executed by reading the design assistance program P1 in the processor 101, and executing the program to attain each of the function units 11 to 15.

In step S11, the data acquisition unit 11 acquires the plurality of performance data pieces relevant to the produced material. The performance data includes the pair of the design parameter group and the observation value of each of the characteristic items.

In step S12, the model construction unit 12 constructs the prediction model, on the basis of the performance data.

In step S13, the acquisition function construction unit 13 constructs the target-oriented acquisition function having the design parameter group as input and the index value of the design parameter group relevant to the improvement of the characteristics indicated in all of the characteristic items as output. The target-oriented acquisition function includes at least the target achievement probability term.

In step S14, the design parameter group acquisition unit 14 acquires the design parameter group by performing single objective optimization with respect to the output of the target-oriented acquisition function. Specifically, the design parameter group acquisition unit 14 implements the optimization including the index value output from the target-oriented acquisition function $A'(x)$ constructed by the acquisition function construction unit 13 as the object variable to acquire the design parameter group $x$ as the optimal solution.

In step S15, the output unit 15 outputs the design parameter group candidate selected in step S14 as the design parameter group for the next material production (step S1).

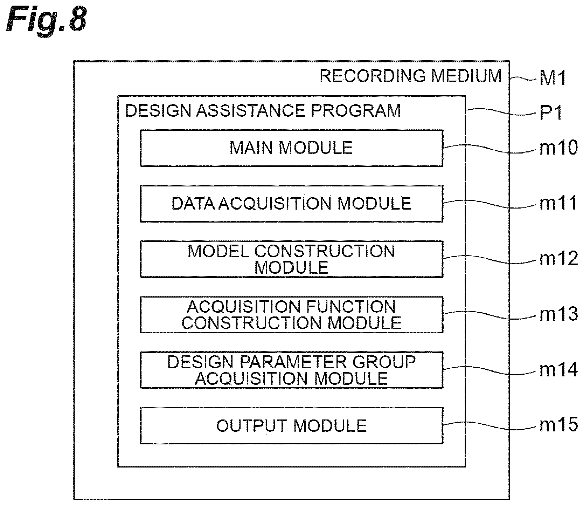

Next, a design assistance program for causing a computer to function as the design assistance device 10 of this embodiment will be described. FIG. 8 is a diagram illustrating the configuration of the design assistance program.

The design assistance program P1 includes a main module m10 comprehensively controlling the design assistance processing in the design assistance device 10, a data acquisition module m11, a model construction module m12, an acquisition function construction module m13, a design parameter group acquisition module m14, and an output module m15. Then, each function for the data acquisition unit 11, the model construction unit 12, the acquisition function construction unit 13, the design parameter group acquisition unit 14, and the output unit 15 is attained by each of the modules m11 to m15.

Note that, the design assistance program P1 may be in a mode where the program is transmitted via a transmission medium such as a communication line, or may be in a mode where the program is stored in a recording medium M1, as illustrated in FIG. 8.

According to the design assistance device 10, the design assistance method, and the design assistance program P1 of this embodiment described above, the prediction model for predicting the observation value of the characteristic item is constructed on the basis of the performance data. Since such a prediction model predicts the observation value as the probability distribution or the approximate or alternative index thereof, it is possible to calculate the achievement probability with respect to the target value of the characteristic item, in accordance with the given design parameter group. In addition, the target-oriented acquisition function having the design parameter group as input and the index value relevant to satisfying the target values of all of the characteristic items as output is constructed. Since the target-oriented acquisition function includes the target achievement probability term including the total achievement probability relevant to the achievement of the target values of all of the characteristic items, the total achievement probability is reflected in the index value output from the target-oriented acquisition function. Accordingly, by the optimization using the index value output from the target-oriented acquisition function as the object variable, it is possible to obtain the design parameter group capable of achieving a target relevant to the characteristic item.

The present invention has been described in detail, on the basis of the embodiment. However, the present invention is not limited to the embodiment described above. The present invention can be variously modified within a range not departing from the gist thereof.

**Reference Signs List**

10: design assistance device, 11: data acquisition unit, 12: model construction unit, 13: acquisition function construction unit, 14: design parameter group acquisition unit, 15: output unit, 21: design parameter storage unit, 22: observation value storage unit, 100: computer, 101: processor, 102: main storage device, 103: auxiliary storage device, 104: communication control device, 105: input device, 106: output device, M1: recording medium, m10: main module, m11: data acquisition module, m12: model construction module, m13: acquisition function construction module, m14: design parameter group acquisition module, m15: output module, P1: design assistance program.

## Claims

1. A design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the device comprising:

   a data acquisition unit acquiring a plurality of performance data pieces including the design parameter group and an observation value of each of the plurality of characteristic items, for the produced product, in-process product, half-finished product, component, or trial product;
   a model construction unit constructing a prediction model for predicting the observation value of the characteristic item as a probability distribution or an approximate or alternative index thereof on the basis of the design parameter group, on the basis of the performance data;
   an acquisition function construction unit constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable;
   a design parameter group acquisition unit acquiring at least one design parameter group by optimization of the target-oriented acquisition function; and
   an output unit outputting the design parameter group acquired by the design parameter group acquisition unit.

2. The design assistance device according to claim 1, wherein the design parameter group acquisition unit acquires at least one design parameter group for optimizing the output of the target-oriented acquisition function.

3. The design assistance device according to claim 1, wherein the design parameter group acquisition unit acquires a plurality of design parameter groups by a predetermined algorithm.

4. The design assistance device according to any one of claims 1 to 3,

   wherein the total achievement probability is an infinite product of an achievement probability with respect to the target value of each of the characteristic items, and
   the achievement probability with respect to the target value of each of the characteristic items is based on the probability distribution of the observation value obtained by inputting the design parameter group to the prediction model of each of the characteristic items.

5. The design assistance device according to claim 4, wherein the target achievement probability term includes the total achievement probability or a logarithm of the total achievement probability.

6. The design assistance device according to any one of claims 1 to 5,

   wherein the acquisition function construction unit constructs an acquisition function having the design parameter group as input and the index value of the design parameter group relevant to the improvement of the characteristic indicated in the characteristic item as output, for each of the characteristic items, and
   the target-oriented acquisition function further includes a term of a weighted sum of the acquisition function of each of the characteristic items.

7. The design assistance device according to claim 6, wherein the target-oriented acquisition function includes a sum of the term of the weighted sum of the acquisition function of each of the characteristic items and the target achievement probability term.

8. The design assistance device according to claim 6, wherein the target-oriented acquisition function includes a product of the term of the weighted sum of the acquisition function of each of the characteristic items and the target achievement probability term.

9. The design assistance device according to any one of claims 6 to 8, wherein the acquisition function construction unit constructs the acquisition function of each of the characteristic items by any one of lower confidence bound (LCB), expected improvement (EI), and probability of improvement (PI).

10. The design assistance device according to any one of claims 6 to 9,
wherein the acquisition function construction unit constructs the acquisition function including a cost value relevant to a cost including at least any one of time and a cost according to the production of the product, the in-process product, the half-finished product, the component, or the trial product, generated in accordance with the design parameter group, the acquisition function for outputting the index value indicating that a degree of suitability of the design parameter group decreases as the cost value increases.

11. The design assistance device according to any one of claims 1 to 9,

wherein the prediction model is a regression model or a classification model having the design parameter group as input and the probability distribution of the observation value as output, and
the model construction unit constructs the prediction model by machine learning using the performance data.

12. The design assistance device according to claim 11, wherein the prediction model is a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of a prediction of a plurality of predictors constructed in different conditions.

13. A design assistance method in a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the method comprising:

a data acquisition step of acquiring a plurality of performance data pieces including the design parameter group and an observation value of each of the plurality of characteristic items, for the produced product, in-process product, half-finished product, component, or trial product;
a model construction step of constructing a prediction model for predicting the observation value of the characteristic item as a probability distribution or an approximate or alternative index thereof on the basis of the design parameter group, on the basis of the performance data;
an acquisition function construction step of constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable;
a design parameter group acquisition step of acquiring at least one design parameter group by optimization of the target-oriented acquisition function; and
an output step of outputting the design parameter group acquired in the design parameter group acquisition step.

14. A design assistance program for causing a computer to function as a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product,
the design assistance program causing the computer to attain:

a data acquisition function of acquiring a plurality of performance data pieces including the design parameter group and an observation value of each of the plurality of characteristic items, for the produced product, in-process product, half-finished product, component, or trial product;

a model construction function of constructing a prediction model for predicting the observation value of the characteristic item as a probability distribution or an approximate or alternative index thereof on the basis of the design parameter group, on the basis of the performance data;

an acquisition function construction function of constructing a target-oriented acquisition function, which is a single acquisition function having the design parameter group as input and an index value of the design parameter group relevant to improvement of the characteristics indicated in all of the characteristic items as output, the target-oriented acquisition function including at least a target achievement probability term including a total achievement probability, which is a probability that the target values of all of the characteristic items are achieved and a probability calculated on the basis of the prediction model by using the design parameter group as a variable;

a design parameter group acquisition function of acquiring at least one design parameter group by optimization of the target-oriented acquisition function; and

an output function of outputting the design parameter group acquired by the design parameter group acquisition function.

**Fig.1**

EP 4 246 364 A1

**Fig.2**

DESIGN ASSISTANCE DEVICE ~ 10

PROCESSOR ~ 101

DATA ACQUISITION UNIT ~ 11

MODEL CONSTRUCTION UNIT ~ 12

ACQUISITION FUNCTION CONSTRUCTION UNIT ~ 13

DESIGN PARAMETER GROUP ACQUISITION UNIT ~ 14

OUTPUT UNIT ~ 15

DESIGN PARAMETER STORAGE UNIT ~ 21

OBSERVATION VALUE STORAGE UNIT ~ 22

## Fig.3

10

| | |
|---|---|
| 101 | PROCESSOR |
| 102 | MAIN STORAGE DEVICE |
| 103 | AUXILIARY STORAGE DEVICE |
| 104 | COMMUNICATION CONTROL DEVICE |
| 105 | INPUT DEVICE |
| 106 | OUTPUT DEVICE |

## Fig.4

| DESIGN PARAMETER IN FIRST TO (T-1)-TH MATERIAL PRODUCTION | DESIGN PARAMETER GROUP | | | |
|---|---|---|---|---|
| | COMPOUND AMOUNT OF RAW MATERIAL A | COMPOUND AMOUNT OF RAW MATERIAL B | $\cdots$ | DESIGN PARAMETER d |
| $x_1$ | $\cdots$ | $\cdots$ | $\cdots$ | $\cdots$ |
| $x_2$ | $\cdots$ | $\cdots$ | $\cdots$ | $\cdots$ |
| $x_3$ | $\cdots$ | $\cdots$ | $\cdots$ | $\cdots$ |
| $\vdots$ | $\cdots$ | $\cdots$ | $\cdots$ | $\cdots$ |
| $x_{T-1}$ | $\cdots$ | $\cdots$ | $\cdots$ | $\cdots$ |

## Fig.5

| NUMBER OF TIMES OF OBSERVATION | OBSERVATION VALUE $y_{m,t}$ OF CHARACTERISTIC ITEM (1 to M) | | | |
| --- | --- | --- | --- | --- |
| | GLASS TRANSITION TEMPERATURE(m=1) | BONDING ADHESIVE FORCE(m=2) | $\cdots$ | CHARACTERISTIC ITEM M(m=M) |
| 1 | $y_{1,1}$ | $y_{2,1}$ | $\cdots$ | $y_{M,1}$ |
| 2 | $y_{1,2}$ | $y_{2,2}$ | $\cdots$ | $y_{M,2}$ |
| 3 | $y_{1,3}$ | $y_{2,3}$ | $\cdots$ | $y_{M,3}$ |
| $\vdots$ | $\vdots$ | $\vdots$ | $\vdots$ | $\vdots$ |
| T-1 | $y_{1,T\text{-}1}$ | $y_{2,T\text{-}1}$ | $\cdots$ | $y_{M,T\text{-}1}$ |
| TARGET VALUE | $y_{1(target)}$ | $y_{2(target)}$ | $\cdots$ | $y_{M(target)}$ |

# Fig.6

```
                    ┌─────────┐
                    │  START  │
                    └─────────┘
                         │
        ┌────────────────┤
        │                ▼
        │   ┌─────────────────────────┐
        │   │    ACQUIRE DESIGN        │  ～S1
        │   │   PARAMETER GROUP        │
        │   └─────────────────────────┘
        │                │
        │                ▼
        │   ┌─────────────────────────┐
        │   │    PERFORM MATERIAL      │  ～S2
        │   │  PRODUCTION (EXPERIMENT) │
        │   └─────────────────────────┘
        │                │
        │                ▼
        │   ┌─────────────────────────┐
        │   │ ACQUIRE OBSERVATION VALUE│  ～S3
        │   │  OF CHARACTERISTIC ITEM  │
        │   └─────────────────────────┘
        │                │        S4
        │                ▼    ～
        │           ◇─────────────────◇
        │          ╱  IS PREDETERMINED  ╲     YES
        │         ◇    END CONDITION     ◇─────────┐
        │          ╲    SATISFIED?      ╱          │
        │           ◇─────────────────◇            │
        │                │ NO                      │
        │                ▼                         │
        │   ┌─────────────────────────┐            │
        │   ││   PERFORM DESIGN       ││  ～S5      │
        │   ││ ASSISTANCE PROCESSING  ││           │
        │   └─────────────────────────┘            │
        └────────────────┘                         │
                                                   ▼
                                            ┌─────────┐
                                            │   END   │
                                            └─────────┘
```

# Fig.7

```
        ┌────────────────────────┐
        │   DESIGN ASSISTANCE    │
        │      PROCESSING        │
        └────────────────────────┘
                    │
┌───────────────────────────────────────────┐
│ ACQUIRE PERFORMANCE DATA INCLUDING PAIR OF │
│ DESIGN PARAMETER GROUP AND OBSERVATION     │ ～S11
│ VALUE OF EACH CHARACTERISTIC ITEM          │
└───────────────────────────────────────────┘
                    │
┌───────────────────────────────────────────┐
│      CONSTRUCT PREDICTION MODEL            │ ～S12
└───────────────────────────────────────────┘
                    │
┌───────────────────────────────────────────┐
│ CONSTRUCT SINGLE ACQUISITION FUNCTION      │
│ (TARGET-ORIENTED ACQUISITION FUNCTION)     │ ～S13
│ INCLUDING TARGET ACHIEVEMENT PROBABILITY   │
└───────────────────────────────────────────┘
                    │
┌───────────────────────────────────────────┐
│ ACQUIRE DESIGN PARAMETER GROUP BY SINGLE   │
│ OBJECTIVE OPTIMIZATION FOR MAXIMIZING      │ ～S14
│ TARGET-ORIENTED ACQUISITION FUNCTION       │
└───────────────────────────────────────────┘
                    │
┌───────────────────────────────────────────┐
│      OUTPUT ACQUIRED                       │
│      DESIGN PARAMETER GROUP                │ ～S15
└───────────────────────────────────────────┘
                    │
              ┌───────────┐
              │    END    │
              └───────────┘
```

# Fig.8

RECORDING MEDIUM — M1

DESIGN ASSISTANCE PROGRAM — P1

| MAIN MODULE | — m10 |

| DATA ACQUISITION MODULE | — m11 |

| MODEL CONSTRUCTION MODULE | — m12 |

| ACQUISITION FUNCTION CONSTRUCTION MODULE | — m13 |

| DESIGN PARAMETER GROUP ACQUISITION MODULE | — m14 |

| OUTPUT MODULE | — m15 |

## INTERNATIONAL SEARCH REPORT

| | International application No. |
|---|---|
| | **PCT/JP2021/042994** |

**A. CLASSIFICATION OF SUBJECT MATTER**

*G06F 30/27*(2020.01)i

FI: G06F30/27

According to International Patent Classification (IPC) or to both national classification and IPC

**B. FIELDS SEARCHED**

Minimum documentation searched (classification system followed by classification symbols)

G06F30/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/088185 A1 (HITACHI, LTD.) 09 May 2019 (2019-05-09) paragraphs [0033]-[0184], fig. 1-19 | 1-14 |
| A | JP 2014-6825 A (HITACHI, LTD.) 16 January 2014 (2014-01-16) paragraphs [0018]-[0073], fig. 1-16 | 1-14 |
| A | JP 2016-45536 A (HITACHI, LTD.) 04 April 2016 (2016-04-04) paragraphs [0018]-[0039] | 1-14 |
| A | JP 2016-200902 A (THE YOKOHAMA RUBBER CO., LTD.) 01 December 2016 (2016-12-01) entire text, all drawings | 1-14 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2022** | **15 February 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/042994**

| Patent document cited in search report | | | Publication date (day/month/year) | Patent family member(s) | | | Publication date (day/month/year) |
|---|---|---|---|---|---|---|---|
| WO | 2019/088185 | A1 | 09 May 2019 | JP paragraphs [0033]-[0184], fig. 1-19 | 2019-86817 | A | |
| JP | 2014-6825 | A | 16 January 2014 | US paragraphs [0034]-[0085], fig. 1-16 | 2014/0005816 | A1 | |
| JP | 2016-45536 | A | 04 April 2016 | (Family: none) | | | |
| JP | 2016-200902 | A | 01 December 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020052737 A